# FASCICULE DE BREVET EUROPEEN

(11) **EP 3 172 751 B1**
(45) Date de publication et mention de la délivrance du brevet: **22.05.2019**
(21) Numéro de dépôt: 15753117.9
(22) Date de dépôt: 17.07.2015
(51) Int. Cl.: H01H 23/04, H02G 3/14

(54) **ENSEMBLE DE FINITION POUR INTERRUPTEUR ÉLECTRIQUE ET SON PROCÉDÉ D'ASSEMBLAGE**
VERKLEIDUNG FÜR ELEKTRISCHE SCHALTER UND MONTAGEVERFAHREN DAFÜR
TRIM FOR ELECTRIC SWITCH AND METHOD OF ASSEMBLING SAME

(30) Priorité: 21.07.2014 FR 1457040
(43) Date de publication de la demande: 31.05.2017
(73) Titulaire: Legrand France, 87000 Limoges (FR); Legrand SNC, 87000 Limoges (FR)
(72) Inventeur: MINGOUT, Corinne, 87700 Aixe sur Vienne (FR)
(74) Mandataire: Jacobacci Coralis Harle
(86) Numéro de dépôt international: PCT/FR2015/051966
(87) Numéro de publication internationale: WO 2016/012700

(56) Documents cités:
- DE-A1-102007 002 397
- DE-A1-102007 046 034
- FR-A1- 2 906 652

## Description

### DOMAINE TECHNIQUE AUQUEL SE RAPPORTE L'INVENTION

La présente invention concerne un appareillage électrique.

Elle concerne plus particulièrement un ensemble de finition pour interrupteur électrique, ainsi que son procédé d'assemblage.

### ARRIERE-PLAN TECHNOLOGIQUE

Pour assurer son rôle fonctionnel de commutation électrique, un interrupteur électrique comprend classiquement un mécanisme d'appareillage dans lequel deux éléments de contact sont mis en contact ou hors contact en fonction de la position d'un entraîneur basculant.

Le mécanisme d'appareillage est usuellement monté dans un support d'appareillage qui comprend des moyens de fixation dans une boîte d'encastrement rapportée sur ou dans une paroi murale.

L'aspect extérieur de l'interrupteur électrique est en général donné par un ensemble de finition qui comprend deux éléments séparés : un doigt de commande monté sur l'entraîneur et une plaque de finition montée sur le support d'appareillage.

Cette conception classique implique que le doigt de commande forme la partie centrale de l'ensemble de finition (le doigt de commande étant entouré par la plaque de finition) et offre donc peu de liberté quant à l'aspect extérieur de l'interrupteur électrique. Le document "DE 10 2007 002397 A1 " divulgue un ensemble de finition pour interrupteur électrique selon le préambule de la revendication 1.

### OBJET DE L'INVENTION

Dans ce contexte, la présente invention propose un ensemble de finition pour interrupteur électrique comprenant un doigt de commande et une plaque de finition dont une partie périphérique est pourvue d'un évidement central délimité par un bord interne de ladite partie périphérique, caractérisé en ce que la plaque de finition comporte une partie centrale disposée dans l'évidement central et entourée par un interstice défini entre le bord externe de la partie centrale et le bord interne de la partie périphérique pour accueillir le doigt de commande de l'interrupteur électrique entourant la partie centrale.

Une telle structure permet d'élargir les possibilités de choix quant à la forme du doigt de commande et donne par conséquent une plus grande liberté dans la définition de l'aspect extérieur de l'interrupteur électrique.

D'autres caractéristiques non limitatives et avantageuses de l'ensemble de finition sont les suivantes :
- la partie centrale et la partie périphérique sont respectivement montées sur une première partie et une seconde partie d'une face avant d'une sous-plaque ;
- la première partie et la seconde partie sont reliées par au moins un pont situé à l'arrière de la sous-plaque ;
- le pont comprend deux parties latérales qui s'étendent vers l'arrière respectivement à partir de la première partie et de la seconde partie et qui ménagent entre elles un espace de réception du doigt de commande ;
- la face arrière de la plaque de finition porte des moyens de positionnement assurant un positionnement relatif déterminé des parties centrale et périphérique de la plaque de finition ;
- lesdits moyens de positionnement comprennent des détrompeurs disposés suivant un motif asymétrique sur l'une et l'autre des parties centrale et périphérique de la plaque de finition, adaptés à coopérer avec des contreparties prévues sur la sous-plaque ou sur un outil ;
- les détrompeurs sont des logements formés en creux dans la face arrière des parties centrale et périphérique ;
- le bord externe de la partie centrale a une forme circulaire ;
- le bord externe de la partie centrale a une forme rectangulaire ou carrée ;
- le doigt de commande entoure la partie centrale ;
- l'interstice est annulaire et le doigt de commande a une forme générale circulaire dans un plan d'extension de la plaque de finition ;
- le doigt de commande a une forme générale carrée ou rectangulaire dans un plan d'extension de la plaque de finition.

L'invention propose également un procédé d'assemblage d'un ensemble de finition pour interrupteur électrique comprenant une plaque de finition, caractérisé en ce qu'il comprend les étapes suivantes :
- découpe d'une partie centrale et d'une partie périphérique de la plaque de finition dans un bloc de matière, la partie périphérique étant pourvue d'un évidement central délimité par un bord interne de ladite partie périphérique ;
- assemblage de la partie centrale et de la partie périphérique de manière à former un interstice entre le bord externe de la partie centrale et le bord interne de la partie périphérique, l'interstice étant destiné à recevoir un doigt de commande de l'interrupteur électrique.

On peut prévoir également une étape de montage de la partie centrale et de la partie périphérique respectivement sur une première partie et une seconde partie d'une face avant d'une sous-plaque ; la première partie et la seconde partie sont par exemple reliées par au moins un pont situé à l'arrière de la sous-plaque.

Dans certains modes de réalisation, l'étape de montage comprend les sous-étapes suivantes réalisées dans cet ordre :
- montage de la partie centrale sur la première partie ;
- montage du doigt de commande sur la sous-plaque ;
- montage de la partie périphérique sur la seconde partie.

L'étape de montage peut par ailleurs comprendre les sous-étapes suivantes :
- dépôt de la sous-plaque sur un outil ;
- dépôt de la plaque de finition sur la sous-plaque de telle sorte que des moyens de positionnement de la plaque de finition coopèrent avec des éléments complémentaires de l'outil. Les moyens de positionnement comprennent par exemple au moins un logement formé sur la face arrière de la partie centrale et/ou un logement formé sur la face arrière de la partie périphérique.

Ceci est intéressant en particulier afin d'assurer un positionnement relatif entre la partie centrale et la partie périphérique, comme expliqué ci-après.

### DESCRIPTION DETAILLEE D'EXEMPLES DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue de face d'un mécanisme d'appareillage utilisé dans un interrupteur électrique conforme aux enseignements de l'invention ;
- la figure 2 est une vue en coupe du mécanisme d'appareillage selon le plan A-A représenté en figure 1 ;
- la figure 3 est une vue en perspective d'un entraîneur du mécanisme d'appareillage représenté aux figures 1 et 2;
- la figure 4 est une vue en éclaté montrant un ensemble de finition conforme aux enseignements de l'invention et l'entraîneur de la figure 3 ;
- la figure 5 représente l'ensemble de finition de la figure 4 assemblé, dans sa position de montage sur une paroi verticale ;
- la figure 6 représente une sous-plaque de l'élément de finition représenté sur les figures 4 et 5 ;
- la figure 7 est une première vue de détail de la sous-plaque de la figure 6;
- la figure 8 est une seconde vue de détail de la sous-plaque de la figure 6;
- la figure 9 est une vue en perspective d'un autre exemple d'ensemble de finition, dans sa position de montage sur une paroi verticale ;
- la figure 10 est une vue de face d'un ensemble de finition du type de celui visible en figure 5, dont la plaque de finition présente un motif ;
- la figure 11 est une vue de face d'un ensemble de finition du type de celui visible en figure 9, dont la plaque de finition présente un motif ;
- la figure 12 est une vue arrière de la plaque de finition de la figure 10 avant découpe ;
- la figure 13 est une vue arrière de la plaque de finition de la figure 10 après découpe ;
- la figure 14 est une vue de face d'un outil utilisé pour l'assemblage d'un ensemble de finition comprenant la plaque de finition de la figure 13 ;
- la figure 15 est une vue en coupe selon la ligne B-B de la figure 14 ;
- la figure 16 représente la pose de la partie périphérique de la plaque de finition sur l'outil de la figure 14 ;
- la figure 17 représente la pose de la partie centrale de la plaque de finition sur l'outil de la figure 14.

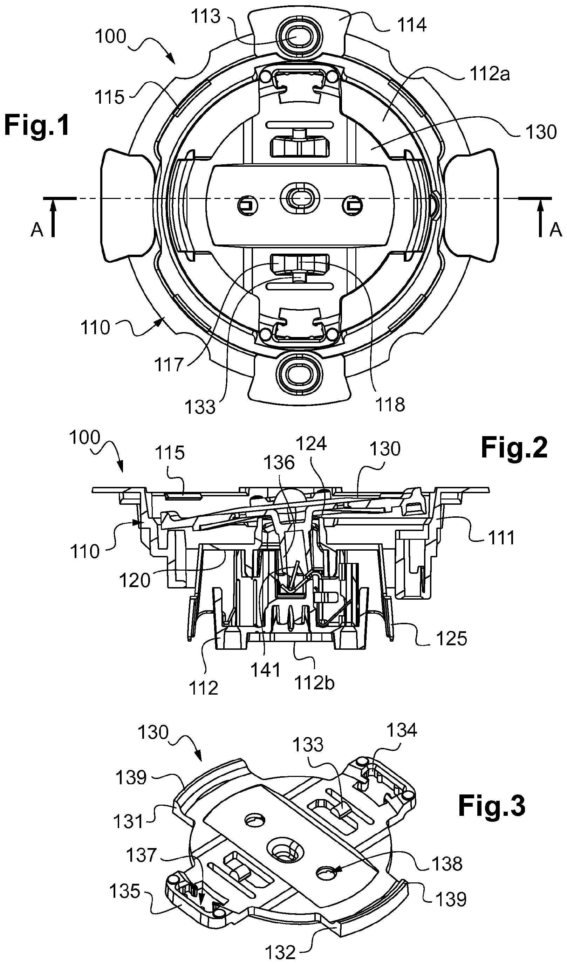

Les figures 1 et 2 représentent un mécanisme d'appareillage 100 (ici un mécanisme de commutation) d'un interrupteur électrique.

Dans la présente description, les termes « avant » et « arrière » seront utilisés par rapport à la direction du regard de l'usager vers la paroi murale sur laquelle est rapporté cet interrupteur électrique. Ainsi, lorsque le commutateur sera installé dans une pièce, l'avant désignera le côté tourné vers l'intérieur de la pièce et l'arrière désignera le côté tourné à l'opposé, vers l'extérieur de la pièce.

Le mécanisme d'appareillage 100 comprend un socle 110 isolant formant support du mécanisme d'appareillage dans un boîtier tel qu'une boîte d'encastrement, comme expliqué ci-après.

Le socle 110 comporte un corps 112 à partir duquel s'étend vers l'avant une paroi latérale 111. Ce socle 110 est ouvert à l'avant et présente un logement adapté à recevoir les autres éléments du mécanisme d'appareillage.

Le corps 112 présente une face avant 112a qui délimite ce logement avec la face intérieure de la paroi latérale 111. Le corps 112 présente également une face arrière 112b à l'opposé de la face avant 112a.

Le mécanisme d'appareillage comporte également un capot 120 qui est une pièce isolante montée dans le socle (par exemple par encliquetage) et qui retient des pièces électriques conductrices logées dans le socle 110, notamment des bornes de connexion électrique à raccorder au réseau électrique local. De manière classique, ces bornes de connexion électrique sont des bornes à connexion automatique, de sorte que chacune d'entre elles est manoeuvrable par un levier de déconnexion qui traverse une ouverture pratiquée dans la paroi du socle 110 pour agir sur une lame-ressort de la borne correspondante adaptée à plaquer l'extrémité dénudée d'un conducteur électrique contre la cage de la borne de connexion. Chaque levier de déconnexion comporte une manette de commande 125, portée par le capot 120 et accessible à l'usager à l'extérieur dudit socle 110.

Le mécanisme d'appareillage 100 comporte également un balai 141 adapté à basculer autour d'un axe de basculement entre deux positions extrêmes, pour mettre en contact ou hors contact un élément de contact mobile, par exemple un grain de contact mobile porté par le balai, avec au moins un élément de contact fixe, par exemple un grain de contact fixe porté par une lame de contact raccordée électriquement à l'une des bornes de connexion électrique.

Le mécanisme d'appareillage 100 comporte également un entraîneur 130 monté basculant sur le socle 110 au moyen de deux pions 133 formés sur l'entraîneur 130 qui sont respectivement engagés dans deux paliers correspondants 118 formés dans le socle 110, par exemple au sommet de deux parties saillantes 117 du corps 112 du socle 110, réalisant ainsi un axe de basculement de l'entraîneur 130 dans le socle 110.

L'entraîneur 130 est une pièce isolante, réalisée par exemple en matière plastique par moulage, qui comprend une partie de liaison à un doigt de commande, qui s'étend dans le logement formé dans le socle 110 comme mentionné ci-dessus, et une cheminée 136 qui s'étend vers l'arrière selon une direction générale perpendiculaire à la partie de liaison, au niveau de l'axe de basculement, à travers une ouverture 124 ménagée à cet effet dans le capot 120. La partie de liaison de l'entraîneur 130 sera décrite plus en détail plus bas en référence à la figure 3.

Comme bien visible sur les figures 1 et 2, le capot 120 est donc monté dans le logement formé dans le socle 110 entre le corps 112 du socle 110 et la partie de liaison de l'entraîneur 130.

Le mécanisme d'appareillage 100 comporte enfin des moyens élastiques de basculement (non représentés), par exemple un ressort monté dans la cheminée 136 formée sur l'entraîneur 130. Ces moyens élastiques de basculement sont aptes, après franchissement d'un point dur, à solliciter le balai 141 en direction de l'une ou de l'autre de ses positions extrêmes en fonction de la position de l'entraîneur 130.

Le mécanisme d'appareillage 100 est destiné à être monté dans un boîtier (non représenté) destiné à être rapporté sur ou dans une paroi murale, selon un montage en saillie ou par encastrement de ce boîtier sur la paroi murale. Pour ce faire, le socle 110 présente des trous 113 formés respectivement dans des oreilles 114 qui s'étendent vers l'extérieur du socle 110 à partir de l'extrémité avant de la paroi latérale 111 : chacun de ces trous 113 est destiné à être traversé par le corps fileté d'une vis (dont la tête repose sur le bord du trou) destinée à être vissée dans un fût taraudé correspondant (non représenté) du boîtier (par exemple une boîte d'encastrement), ce qui permet d'assurer la fixation du mécanisme d'appareillage 100 dans le boîtier.

Comme le montrent les figures 1 et 2, la paroi latérale 111 du socle 110, ici de forme générale cylindrique, présente, à plusieurs endroits sur son pourtour intérieur, une griffe 115 destinée à coopérer avec des moyens d'ancrage d'un ensemble de finition, comme décrit plus bas, afin d'assurer le montage de l'ensemble de finition sur le mécanisme d'appareillage 100.

La figure 3 est une vue en perspective de l'entraîneur 130.

La partie de liaison de l'entraîneur 130 présente la forme générale d'un disque (dont la circonférence est pour l'essentiel concentrique avec la paroi latérale cylindrique 111) à partir duquel s'étendent quatre bras 131, 132, 134, 135.

Un premier bras 134 et un second bras 135 s'étendent respectivement de part et d'autre du disque dans la direction générale de l'axe de basculement de l'entraîneur 130 (et donc au droit d'un pion 133). Le premier bras 134 et le second bras 135 sont chacun pourvus d'un évidement 137 (ici débouchant) propre à coopérer avec une partie complémentaire d'un doigt de commande, comme expliqué plus loin.

Un troisième bras 131 et un quatrième bras 132 s'étendent quant à eux respectivement de part et d'autre du disque dans une direction générale perpendiculaire à l'axe de basculement de l'entraîneur 130. Dans l'exemple décrit, le premier bras 134, le second bras 135, le troisième bras 131 et le quatrième bras 132 sont donc régulièrement répartis sur la circonférence du disque.

Chacun des troisième et quatrième bras 131, 132 se termine à son extrémité libre par un bourrelet 139 en saillie vers l'avant.

La partie de liaison de l'entraîneur 130 présente, au niveau du disque et dans la direction générale d'extension des troisième et quatrième bras 131, 132, deux évidements 138 (ici débouchants), situés de part et d'autre du centre du disque et destinés à coopérer avec des parties complémentaires d'un doigt de commande d'un autre type que celui mentionné ci-dessus.

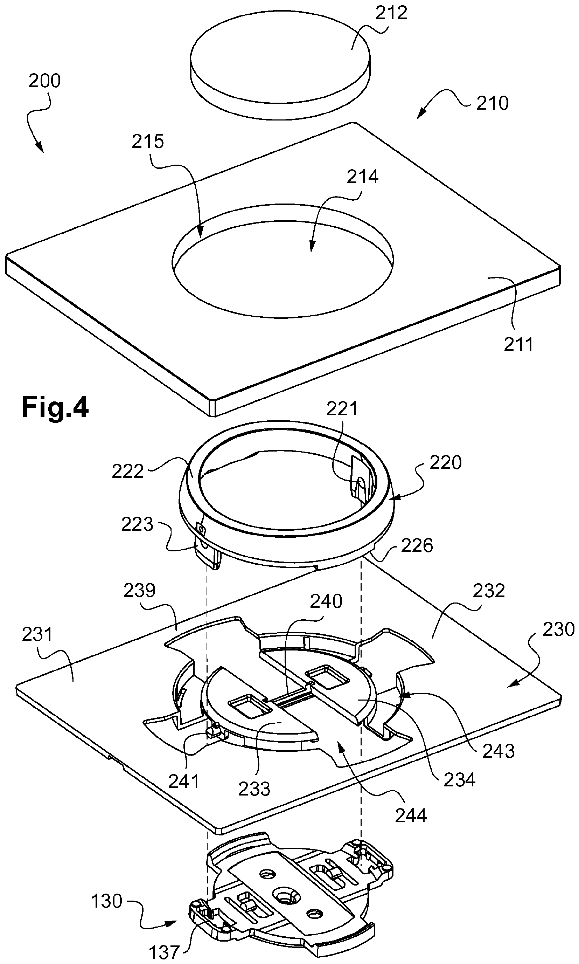

La figure 4 est une vue en éclaté montrant un ensemble de finition 200 conforme aux enseignements de l'invention et l'entraîneur 130.

L'ensemble de finition 200 comprend une plaque de finition 210, formée ici d'une partie périphérique 211 et d'une partie centrale 212 séparées, un doigt de commande 220 et une sous-plaque 230.

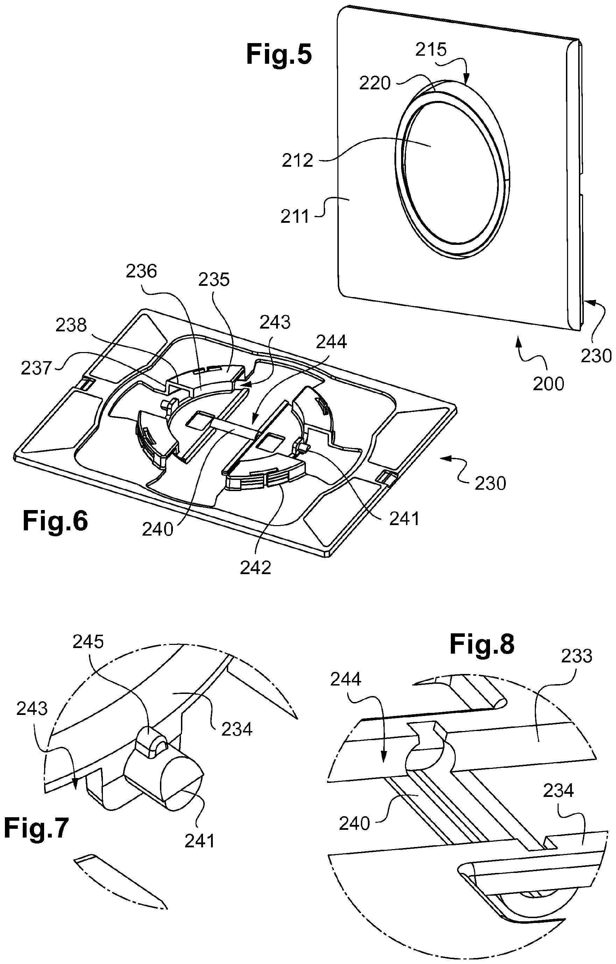

La partie périphérique 211 de la plaque de finition 210 a une forme générale extérieure de plaque parallélépipédique et présente un évidement central 214, ici circulaire dont le diamètre correspond (au jeu près) au diamètre extérieur du doigt de commande 220, ici annulaire, de sorte que l'évidement central circulaire 214 peut loger le doigt de commande annulaire 220 et, au centre de celui-ci, la partie centrale 212, ici se présentant sous la forme d'un disque, comme bien visible sur la figure 5 qui représente l'ensemble de finition assemblé.

Dans le plan général d'extension de la plaque de finition 210 (qui est parallèle au plan général d'extension de la sous-plaque 230 comme décrit ci-après), le doigt de commande 220 s'étend (en position montée comme visible en figure 5) selon une ligne qui forme une courbe fermée (en forme de cercle dans l'exemple des figures 4 et 5). En position montée et en se plaçant dans le plan d'extension générale de la plaque de finition 210, la partie centrale 212 de la plaque de finition 210 s'étend donc à l'intérieur de la courbe fermée formée par le doigt de commande 220, tandis que la partie périphérique 211 s'étend à l'extérieur de cette courbe fermée.

En d'autres termes la plaque de finition 210 comprend une ouverture (ou interstice) 215, ici un espace annulaire, définie entre le bord interne de l'évidement central de la partie périphérique 211 et le bord externe de la partie centrale 212, au travers de laquelle émerge le doigt de commande 220 annulaire.

Bien entendu, selon d'autres variantes, on pourrait prévoir que l'ouverture de la plaque de finition suive une ligne fermée carrée ou rectangulaire (ou une ligne fermée de toute autre forme, par exemple triangulaire ou ovale), le doigt de commande, qui est reçu dans cette ouverture, présentant alors une forme adaptée qui s'étend suivant une courbe fermée carrée ou rectangulaire (ou, de manière générale, de forme correspondant à celle de l'ouverture).

Comme le montre plus particulièrement la figure 4, la sous-plaque 230 comporte une face avant plane interrompue en plusieurs endroits de sorte que sont définies, dans cette face avant, deux parties latérales 231, 232 (une partie latérale gauche 231 et une partie latérale droite 232) et deux parties centrales 233, 234 (une partie centrale gauche 233 et une partie centrale droite 234).

L'ensemble formé par les deux parties centrales 233, 234 est séparé de l'ensemble formé par les deux parties latérales 231, 232 par un espace annulaire 243 dans lequel le doigt de commande annulaire 220 est reçu en position montée.

L'ensemble formé par la partie latérale gauche 231 et par la partie centrale gauche 233 est par ailleurs séparé de l'ensemble formé par la partie latérale droite 232 et par la partie centrale droite 234 par une ouverture globalement rectangulaire 244, qui est délimitée à chacune de ses deux extrémités par un bras de matière 239 reliant la partie latérale gauche 231 et la partie latérale droite 232 et qui est traversée en son centre par une portion de cylindre 240 (bien visible sur la vue de détail de la figure 8) reliant la partie centrale gauche 233 et la partie centrale droite 234.

Comme bien visible sur la figure 6 qui présente la face arrière de la sous-plaque 230, chaque partie centrale 233, 234 est en outre reliée à la partie latérale 231, 232 correspondante au moyen de deux ponts 235. Chaque pont 235 est formé d'une première paroi latérale 236 s'étendant vers l'arrière à partir de la périphérie externe de la partie centrale 233, 234 concernée, d'une seconde paroi latérale 237 s'étendant vers l'arrière à partir d'un bord interne de la partie latérale 231, 232 concernée et d'une paroi de fond 238, essentiellement parallèle à la face avant de la sous-plaque 220 et en retrait par rapport à celle-ci, et reliant la première paroi latérale 236 et la seconde paroi latérale 237.

Grâce à sa forme, chaque pont 235 permet ainsi de participer à la liaison mécanique d'une partie centrale 233, 234 à une partie latérale 231, 232, tout en laissant libre l'espace annulaire 243 mentionné ci-dessus notamment dans le plan de la face avant de la sous-plaque 230 afin de recevoir le doigt de commande annulaire 220 dans cet espace annulaire 243.

On remarque par ailleurs que, pour chaque pont 235, la surface externe de la seconde paroi latérale 237 présente des rainures 242 qui forment les moyens d'ancrage destinés à venir coopérer avec une griffe 115 correspondante du socle 110 du mécanisme d'appareillage 100 de manière à retenir l'ensemble de finition 200 sur le mécanisme d'appareillage 100 comme déjà indiqué.

À cet égard, les secondes parois latérales 237 des ponts 235 s'étendent toutes dans un cylindre de diamètre sensiblement identique à celui de la paroi latérale cylindrique 111 du socle 110 du mécanisme d'appareillage 100 de sorte que, lors du montage de l'ensemble de finition 200 sur le mécanisme d'appareillage 100, les ponts 235 s'emboîtent dans le logement formé comme indiqué plus haut par le socle 110.

Malgré les interruptions de matière (espace annulaire 243, ouverture globalement rectangulaire 244), la face avant (formée notamment des parties latérales 231, 232 et des parties centrales 233, 234) s'étend sur plus de la moitié de la surface disponible du fait des dimensions de la sous-plaque 230. Autrement dit, dans le plan de la face avant de la sous-plaque 230, la surface de la face avant (principalement les parties pleines 231, 232, 233, 234) est supérieure à la surface cumulée de l'espace annulaire 243 et de l'ouverture globalement rectangulaire 244. La face avant plane de la sous-plaque 230 forme donc un bon support pour la plaque de finition 210, précisément pour la face arrière (également plane) de la plaque de finition 210, par exemple en vue d'un assemblage par collage comme expliqué plus loin.

Sur deux dents qui s'étendent vers l'arrière respectivement à partir des bords externes arrondis de la partie centrale gauche 233 et de la partie centrale droite 234 qui délimitent l'espace annulaire 243, la sous-plaque 230 comporte respectivement deux pions 241 de forme générale cylindrique (dont un est visible sur la vue de détail de la figure 7) destinés à coopérer avec des évidements correspondants 221 formés dans le doigt de commande annulaire 220 de sorte que le doigt de commande annulaire 220 puisse être monté rotatif sur la sous-plaque 230, selon un axe de rotation parallèle à la face avant de la sous-plaque 230 et qui correspond, en position montée de l'interrupteur électrique, à l'axe de basculement de l'entraîneur 130 sur le socle 110.

On prévoit par exemple en outre un ergot 245 situé à la base de chaque pion 241 afin de limiter le jeu latéral du doigt de commande annulaire 220.

Chaque partie centrale 233, 234 présente par ailleurs une fenêtre conçue pour laisser un espace libre, en position montée, pour laisser passer les deux parties saillantes 117 du corps 112 formant palier 118.

Comme nous l'avons déjà décrit précédemment, le doigt de commande 220 a une forme générale annulaire qui lui permet d'être situé, dans le plan d'extension générale de la plaque de finition 210, à l'intérieur de la partie périphérique 211 de la plaque de finition 210 et d'entourer la partie centrale 212 de la plaque de finition 210.

Précisément, le doigt de commande 220 comprend un corps principal 222 formant une portion de sphère de sorte que le diamètre du corps principal 222 à son extrémité périphérique arrière (située à l'arrière de la face avant de la plaque de finition 210 en position montée) est supérieur au diamètre du corps principal 222 à son extrémité périphérique avant (située à l'avant de la face avant de la plaque de finition 210 en position montée), ce qui confère au corps principal 222 du doigt de commande 220 une forme de tonneau qui épouse au plus près la partie centrale 212 de la plaque de finition 210, en se refermant même légèrement sur celle-ci vers l'avant.

Comme le montre mieux la figure 4, le doigt de commande 220 comporte également deux pattes 223 qui s'étendent vers l'arrière à partir du corps principal 222. Dans l'exemple décrit ici, les deux évidements 221 destinés à recevoir les pions cylindriques 241 issus de la sous-plaque 230 sont respectivement formés dans les deux pattes 223.

Le doigt de commande 220 comporte enfin deux prolongements 226 qui s'étendent chacun légèrement vers l'arrière à partir du bord arrière (ici circulaire) du corps principal 222, sur une partie seulement de la circonférence du bord arrière distincte de celles portant les pattes 223.

En position montée de l'interrupteur électrique (c'est-à-dire lorsque l'ensemble de finition 200 est monté sur le mécanisme d'appareillage 100), l'extrémité arrière de chaque patte 223 est logée dans l'évidement complémentaire 137 correspondant formé comme déjà indiqué dans l'entraîneur 130 (comme illustré par les pointillés sur la figure 4) de sorte que le basculement du doigt de commande 220 par l'utilisateur (ici autour de l'axe de rotation formé par les pions cylindriques 241, alignés avec l'axe de basculement de l'entraîneur 130), qui provoque en outre un appui de l'un des prolongements 226 du doigt de commande 220 sur le bourrelet correspondant 139 de l'entraîneur 130, entraîne le basculement de l'entraîneur 130 et ainsi la commutation de l'interrupteur électrique.

Pour l'assemblage de l'ensemble de finition 200 tel que représenté sur la figure 5, la partie centrale 212 de la plaque de finition 210 est fixée (par exemple par collage) sur les parties centrales 233, 234 de la face avant de la sous-plaque 230 ; le doigt de commande annulaire 220 est ensuite monté sur la sous-plaque 230 par coopération des pions cylindriques 241 et des évidements 221 (en jouant par exemple sur l'élasticité des pattes 223 lors du montage). Enfin, la partie périphérique 211 de la plaque de finition 210 est fixée (par exemple par collage) sur les parties latérales 231, 232 de la sous-plaque 230.

L'ensemble de finition 200 peut ainsi être vendu sous forme d'un produit monobloc.

On remarque que, dans l'exemple décrit ici, la sous-plaque 230 (en l'occurrence sa face avant) et la plaque de finition 210 (ici en l'occurrence la partie périphérique 211 de la plaque de finition 210) ont quasiment les mêmes dimensions extérieures ; on peut prévoir que la plaque de finition 210 ait des dimensions (longueur, largeur) légèrement supérieures à celles de la face avant de la sous-plaque 230 afin que seule soit visible la plaque de finition 210 lorsque l'interrupteur électrique est vu de face.

L'installateur ou l'utilisateur achète par ailleurs un mécanisme d'appareillage 100 du type de celui représenté sur les figures 1 et 2 et décrit ci-dessus et monte ce mécanisme d'appareillage 100, comme déjà décrit ci-dessus dans un boîtier rapporté dans ou sur une paroi murale.

L'installateur ou l'utilisateur monte alors l'ensemble de finition 200 sur le mécanisme d'appareillage par simple emboîtement de la paroi latérale 111 du socle 110 du mécanisme d'appareillage 100 et de la paroi externe de la seconde paroi latérale 237 des ponts 235 formés à l'arrière de la sous-plaque 230 (les griffes 115 coopérant avec les rainures 242 comme déjà expliqué), ce qui permet également la coopération (déjà mentionnée) des pattes 223 du doigt de commande 220 et des évidements 137 de l'entraîneur 130 et donc la commande de la commutation de l'interrupteur électrique au moyen du doigt de commande 220.

On remarque que la plaque de finition 210 (composée de sa partie périphérique 211 et de sa partie centrale 212) recouvre totalement la face avant de la sous-plaque 230 (notamment les parties périphériques 231, 232 et les parties centrales 233, 234 de la face avant de la sous-plaque 230). En particulier, l'interstice formé entre la partie périphérique 211 et la partie centrale 212 s'étend au droit de l'espace annulaire 243 formé entre les parties centrales 233, 234 et les parties latérales 231, 232 de la face avant de la sous-plaque 230. Comme bien visible en figure 5, seule la tranche de la sous-plaque 230 est donc visible par l'utilisateur une fois l'ensemble de finition 200 monté (par l'intermédiaire du mécanisme d'appareillage 100) sur une paroi murale.

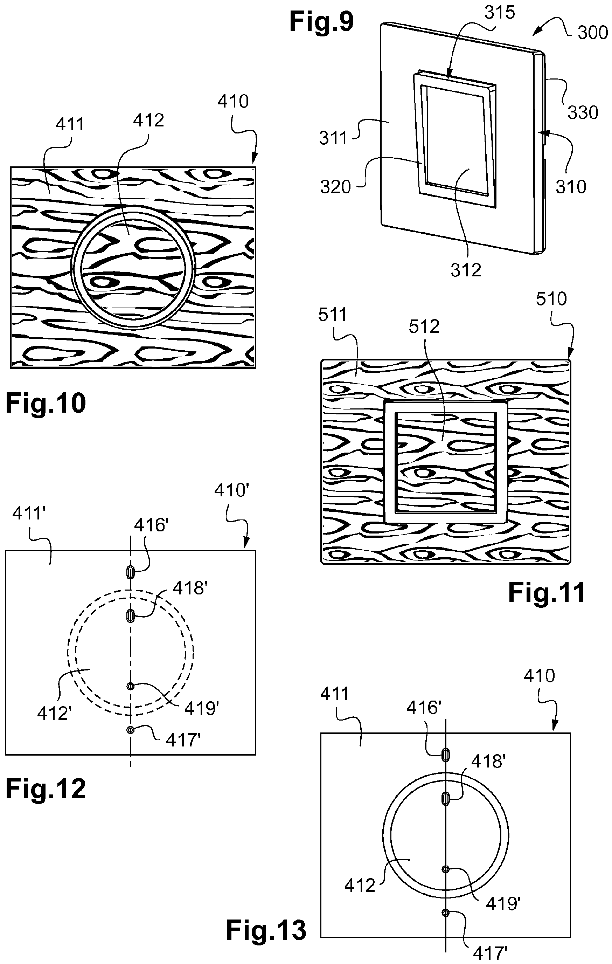

La figure 9 est une vue en perspective d'un autre exemple d'ensemble de finition 300, dans sa position de montage sur une paroi verticale.

Comme déjà indiqué ci-dessus, la doigt de commande n'est pas nécessairement circulaire mais peut présenter une forme générale rectangulaire ou carrée (voire, en variante, toute autre forme) en coupe dans le plan général d'extension de la plaque de finition 310, comme c'est le cas pour le doigt de commande 320 visible en figure 9.

Dans ce mode de réalisation, la plaque de finition 310 comprend une partie périphérique 311 qui présente une ouverture centrale carrée et une partie centrale 312, également de forme carrée. On pourrait prévoir en variante que l'ouverture centrale et/ou la partie centrale 312 soient de forme rectangulaire.

La longueur d'un bord externe de la partie centrale 312 (ici la longueur du côté de la partie centrale carrée 312) est légèrement inférieure à la longueur du bord interne correspondant de l'ouverture centrale de la partie périphérique 311 (ici la longueur du côté de l'ouverture centrale carrée) de manière à ménager un espace 315 (dans le plan général d'extension de la plaque de finition 310) entre la partie périphérique 311 et la partie centrale 312, espace 315 (ou interstice) qui s'étend selon une courbe fermée sur tout le pourtour extérieur de la partie centrale 312 et peut ainsi loger le doigt de commande 320 dont la forme générale correspond à celle de cet espace.

Comme pour le mode de réalisation représenté en figure 5, le doigt de commande 320 est monté à rotation sur une sous-plaque 330 dont la face avant porte les parties centrale 312 et périphérique 311 de la plaque de finition 310. Une telle sous-plaque 330 est par exemple du même type que la sous-plaque 230 représentée sur les figures 6 et 7, mise à part la forme de l'espace annulaire 243 (qui est de forme générale carrée dans le cas du mode de réalisation de la figure 9).

Dans certains cas, la face avant de la plaque de finition 210, 310 présente extérieurement un motif dont on veut assurer la continuité entre la partie périphérique 211, 311 et la partie centrale 212, 312 de la plaque de finition 210, 310, en particulier lorsque la partie périphérique 211, 311 et la partie centrale 212, 312 sont réalisées par découpe à partir d'un même bloc de matériau.

Comme représenté sur les figures 10 et 11, c'est notamment le cas pour des plaques de finition 410, 510 réalisées en bois et dont la surface extérieure (notamment la face avant) présente des veines : on souhaite que les veines visibles sur la partie centrale 412, 512 soient chacune dans le prolongement d'une veine correspondante sur la partie périphérique 411, 511.

Cette problématique existe pour d'autres matériaux que le bois tels que l'ardoise ou les matériaux brossés. Par ailleurs, le motif dont on souhaite assurer la continuité entre la partie centrale 412, 512 et la partie périphérique 411, 512 peut également être un décor prévu sur la face avant de la plaque de finition (par exemple un graphisme), typiquement lorsqu'il est avantageux de déposer un tel décor sur la face avant de la plaque de finition avant découpe de celle-ci pour obtenir la partie périphérique et la partie centrale.

On décrit à présent un exemple de solution permettant d'assurer qu'après assemblage de l'ensemble de finition, la partie périphérique et la partie centrale de la plaque de finition seront disposées de manière à préserver la continuité d'un motif présent sur la partie périphérique et la partie centrale de la plaque de finition.

La figure 12 représente une vue arrière de la plaque de finition 410' avant découpe. Sur cette figure, on a représenté en pointillés le tracé des découpes qui permettront ultérieurement de séparer la partie centrale 412 et la partie périphérique 411 tout en laissant subsister un espace ou interstice (ici annulaire) entre les deux parties.

Sur chaque zone 411', 412' correspondant respectivement à une future partie 411, 412, on réalise au moins un logement 416', 417', 418', 419' sur la face arrière de la plaque de finition 410', ce de manière dissymétrique par rapport à la partie concernée.

Par exemple, sur la zone 412' correspondant à la partie centrale 412, on réalise au moins un logement 418', 419' qui n'est pas symétrique de révolution par rapport au centre de la partie centrale 412 (qui a ici, comme déjà indiqué, la forme d'un disque). En effet, du fait de la forme externe circulaire de la partie centrale 412, elle pourrait être placée selon une orientation angulaire quelconque en l'absence de moyens de détrompage (ou détrompeurs) tels que les logements 418', 419', comme expliqué ci-après.

De même, sur la zone 411' correspondant à la partie périphérique 411, on réalise au moins un logement 416', 417' qui n'est pas symétrique par rapport à un axe médian horizontal ou vertical de la partie périphérique 411. En effet, la forme externe de la partie périphérique 411 étant rectangulaire, seules deux positions de montage sont possibles pour cette partie en l'absence de moyens de détrompage (détrompeurs) tels que les logements 416', 417'.

Dans le mode de réalisation représenté en figure 12, la zone 411' correspondant à la partie périphérique 411 comprend (en tant que logements) un évidement oblong 416' formé dans la partie supérieure de la face arrière de la plaque de finition 410' avant découpe et un évidement circulaire 417' formé dans la partie inférieure de cette face arrière. L'évidement oblong 416' et l'évidement circulaire 417' sont ici réalisés sur un axe vertical médian de la plaque de finition 410' avant découpe.

La zone 412' correspondant à la partie centrale 412 comprend de même (en tant que logements) un évidement oblong 418' formé dans la face arrière de la plaque de finition 410' avant découpe, dans la partie supérieure de la zone 412', et un évidement circulaire 419' formé dans cette face arrière dans la partie inférieure de la zone 412'. L'évidement oblong 418' et l'évidement circulaire 419' sont ici réalisés sur un axe vertical médian de la plaque de finition 410' avant découpe

On remarque que, dans l'exemple décrit ici, les logements 416', 417', 418', 419' sont situés (sur la face arrière de la plaque de finition) à des endroits destinés à être situés au droit d'évidements de la sous-plaque 230 (ici au droit de l'ouverture globalement rectangulaire 244) lorsque la plaque de finition et la sous-plaque sont assemblées. Ceci permet que les logements 416', 417', 418', 419' puissent coopérer avec des éléments complémentaires d'un outil utilisé pour l'assemblage, comme décrit ci-après.

En variante, on pourrait toutefois prévoir que les logements 416', 417', 418', 419' soient situés (sur la face arrière de la plaque de finition) à des endroits destinés à être situés au droit de la face avant de la sous-plaque 230 lorsque la plaque de finition et la sous-plaque sont assemblées. Dans ce cas, c'est la face avant de la plaque de finition qui présente des éléments, respectivement de forme complémentaire aux différents logements, afin de coopérer avec eux et d'obliger le montage dans une position prédéterminée de la partie périphérique sur la sous-plaque et de la partie centrale sur la sous-plaque.

On a représenté sur la figure 13 une vue arrière de la plaque de finition 410 après découpe, c'est-à-dire après séparation de la partie périphérique 411 et de la partie centrale 412.

Bien que ces deux parties 411, 412 soient représentées sur la figure 13 dans la position relative qu'elles ont avant découpe et qu'elles doivent avoir après assemblage sur la sous-plaque 230 pour former un ensemble de finition, elles sont en réalité séparées à cette étape du processus et leur positionnement relatif n'est donc pas maîtrisé. Elles pourront toutefois être correctement positionnées pour leur assemblage sur la sous-plaque 230 grâce aux logements 416', 417', 418', 419' comme expliqué à présent.

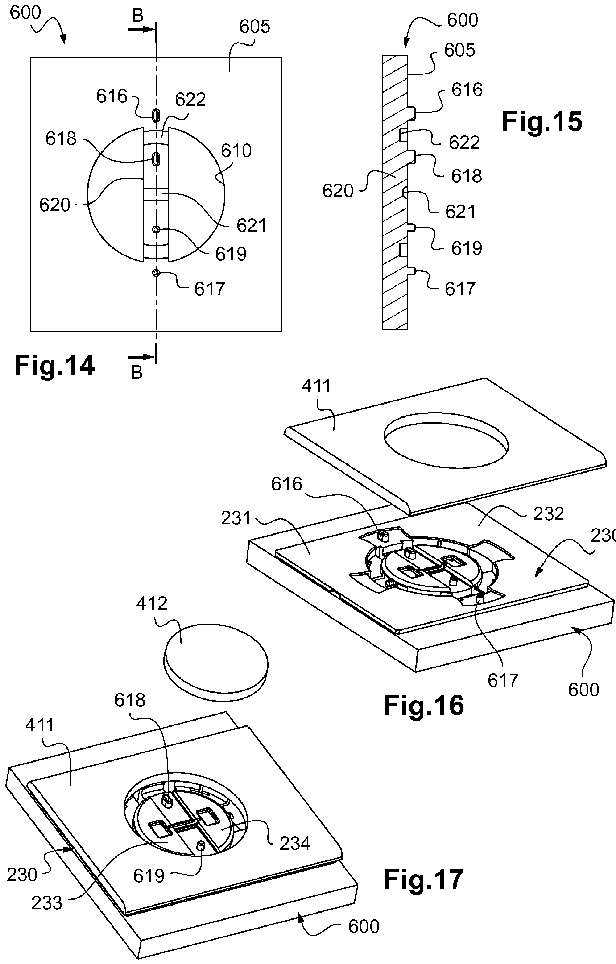

Les figures 14 et 15 représentent un outil 600 utilisé au cours de l'assemblage d'un ensemble de finition selon un mode possible de mise en oeuvre de l'invention.

Cet outil 600 présente une forme générale de plaque parallélépipédique dont la grande face à des dimensions supérieures ou égales à celles de la plaque de finition 410 à assembler. L'outil 600 présente une ouverture centrale 610 dont la forme correspond à celle de la seconde paroi latérale 237 de la sous-plaque 230, ici une forme circulaire.

L'ouverture centrale 610 est traversée par un bras 620 qui s'étend à travers l'ouverture centrale 610 selon un axe médian de l'outil 600. La face avant du bras 620 s'étend dans le plan de la face avant 605 de l'outil 600 dans son ensemble (c'est-à-dire la face avant de la plaque parallélépipédique susmentionnée). De même, la face arrière du bras 620 peut s'étendre dans le plan de la face arrière de l'outil 600.

Selon l'axe médian précité, la face avant 605 de l'outil 600 présente des excroissances 616, 617, 618, 619 dont les formes sont complémentaires respectivement des formes des évidements 416', 417', 418', 419' formés dans la face arrière de la plaque de finition 410 comme expliqué ci-dessus et visible en figure 13. Les excroissances 616, 617, 618, 619 forment donc des contreparties des logements 416', 417', 418', 419'.

Précisément, le bras 620 présente, dans la région supérieure de sa face avant, une excroissance oblongue 618 dont la forme est complémentaire de celle de l'évidement oblong 418' et, dans la région inférieure de sa face avant, une excroissance circulaire 619 dont la forme est complémentaire de celle de l'évidement circulaire 419'.

Dans sa région située immédiatement au-dessus du bras 620 (voir en particulier la figure 14), la face avant 605 de l'outil 600 présente une excroissance oblongue 616 dont la forme est complémentaire à celle de l'évidement oblong 416'. Dans sa région située immédiatement en-dessous du bras 620, la face avant 605 de l'outil 600 présente une excroissance circulaire 617 dont la forme est complémentaire de celle de l'évidement circulaire 417'.

On remarque que le bras 620 présente également, dans sa face avant située comme déjà indiqué dans le plan de la face avant 605 de l'outil 600, un évidement central 621 de dimensions suffisantes pour loger la portion de cylindre 240 lorsque la sous-plaque 230 est montée sur l'outil 600 comme expliqué ci-après et visible en particulier sur la figure 16. Le bras 620 présente en outre dans sa face avant, dans chacune des régions d'extrémité du bras 620, un évidement 622 conçu pour accueillir éventuellement une partie correspondant du doigt de commande 220 lors du montage de l'ensemble de finition, en particulier lors du montage du doigt de commande 220 sur la sous-plaque 230 (la sous-plaque 230 étant elle-même positionné sur l'outil 600 comme il vient d'être mentionné).

La figure 16 représente la pose de la partie périphérique 411 de la plaque de finition 410 sur l'outil 600 ce qui permet le montage de cette partie périphérique 411 sur la sous-plaque 230. On remarque que la sous-plaque 230 est identique à celle décrite ci-dessus en référence notamment à la figure 6.

Comme visible sur la figure 16, la sous-plaque 230 est tout d'abord posée sur l'outil 600 (la face arrière de la sous-plaque 230 au contact de la face avant de l'outil 600) de telle sorte que la seconde paroi latérale 237 de la sous-plaque 230 vienne au contact de l'ouverture centrale 610 de l'outil 600. La seconde paroi latérale 237 et l'ouverture 610 étant circulaires, le positionnement définitif de la sous-plaque 230 sur l'outil 600 est réalisé en vérifiant par exemple l'alignement des bords latéraux de la sous-plaque 230 et de l'outil 600 (ces deux pièces ayant la même dimension dans une direction donnée, ici selon le bord horizontal de la sous-plaque 230), ou l'alignement des bords latéraux extérieurs du bras 620 et des bords internes correspondants de l'ouverture globalement rectangulaire 244.

Les excroissances de la face avant 605 de l'outil 600, en particulier les excroissances 616, 617 formées sur la face avant 605 en dehors du bras 620, sont alors situées dans l'ouverture globalement rectangulaire 244 et dépassent au-dessus de la face avant de la sous-plaque 230. On remarque à cet égard que la hauteur de chacune des excroissances 616, 617, 618, 619 est pour ce faire supérieure (d'au moins 1 mm) à l'épaisseur de la sous-plaque 230 dans ses régions formant sa face avant (notamment les parties latérales 231, 232 et les parties centrales 233, 234 mentionnés plus haut).

La partie périphérique 411 de la plaque de finition 410 peut alors être posée sur la sous-plaque 230 de sorte que l'évidement oblong 416' (visible en figure 13) coopère (par complémentarité de formes) avec l'excroissance oblongue 616 et que l'évidement circulaire 417' (visible en figure 13) coopère (par complémentarité de formes) avec l'excroissance circulaire 617. Du fait de la différence de forme entre les éléments oblongs (évidement oblong 416', excroissance oblongue 616) et les éléments circulaires (évidement circulaire 417', excroissance circulaire 617), il existe un seul positionnement possible de la partie périphérique 411 sur l'outil 600.

On remarque que l'on obtient le même résultat d'unicité du positionnement en utilisant un seul des deux éléments de positionnement sur l'outil 600 (par exemple l'excroissance circulaire 617) et l'élément complémentaire sur la partie périphérique 411 (dans cet exemple l'évidement circulaire 417'), dès lors que les bords de la partie périphérique 411, de forme rectangulaire, doivent être alignés aux bords de la sous-plaque 230. Toutefois, l'utilisation de deux éléments de positionnement comme dans l'exemple représenté sur les figures permet de faciliter le positionnement de la partie périphérique 411 sur l'outil 600, et donc sur la sous-plaque 230 positionnée au préalable sur l'outil 600 comme expliqué ci-dessus.

Avant de positionner la partie périphérique 411 sur l'outil 600, on peut revêtir les parties latérales 231, 232 de la face avant de la sous-plaque 230 d'une colle adaptée, de sorte que la pose de la partie périphérique 411 sur l'outil 600 permet le collage de la partie périphérique 411 sur la sous-plaque 230 (éventuellement en appliquant une pression sur la face avant de la partie périphérique 411).

La figure 17 représente la pose de la partie centrale 412 de la plaque de finition 410 sur l'outil 600 ce qui permet le montage de cette partie centrale 412 sur la sous-plaque 230.

Comme visible sur la figure 17, on décrit ici la pose de la partie centrale 412 comme subséquente à celle de la partie périphérique 411, comme cela vient d'être décrit en référence à la figure 16. On remarque toutefois que la partie centrale 412 pourrait tout à fait être déposée sur l'outil 600 (et donc montée sur la sous-plaque 230) avant la partie périphérique 411, conformément au même processus que celui décrit ci-dessous. La pose de la partie centrale 412 avant la partie périphérique 411 peut même être souhaitable, par exemple lorsque la forme du doigt de commande 220 le rend nécessaire, comme expliqué ci-dessus en référence aux figures 4 et 5.

Quoi qu'il en soit, au début du procédé de pose de la partie centrale 412, la sous-plaque 230 est positionné sur l'outil 600 (la face arrière de la sous-plaque 230 au contact de la face avant de l'outil 600) comme indiqué ci-dessus en référence à la figure 16.

Les excroissances de la face avant 605 de l'outil 600, en particulier les excroissances 618, 619 formées sur la face avant du bras 620, sont alors situées dans l'ouverture globalement rectangulaire 244 et dépassent au-dessus de la face avant de la sous-plaque 230.

La partie centrale 412 de la plaque de finition 410 peut alors être posée sur la sous-plaque 230 de sorte que l'évidement oblong 418' (visible en figure 13) coopère (par complémentarité de formes) avec l'excroissance oblongue 618 et que l'évidement circulaire 419' (visible en figure 13) coopère (par complémentarité de formes) avec l'excroissance circulaire 619. Du fait de la différence de forme entre les éléments oblongs (évidement oblong 418', excroissance oblongue 618) et les éléments circulaires (évidement circulaire 419', excroissance circulaire 619), il existe un seul positionnement possible de la partie centrale 412 sur l'outil 600.

On remarque que l'on obtient le même résultat d'unicité du positionnement en utilisant un seul des deux éléments de positionnement sur l'outil 600 (par exemple l'excroissance circulaire 619) et l'élément complémentaire sur la partie centrale 412 (dans cet exemple l'évidement circulaire 419'), dès lors que le bord circulaire de la partie centrale 412 doit être aligné aux bords extérieurs respectifs des parties centrales 233, 234 de la sous-plaque 230 et que l'élément de positionnement n'est pas situé au centre de la partie centrale 412. Toutefois, l'utilisation de deux éléments de positionnement comme dans l'exemple représenté sur les figures permet de faciliter le positionnement de la partie centrale 412 sur l'outil 600, et donc sur la sous-plaque 230 positionnée au préalable sur l'outil 600 comme expliqué ci-dessus.

Avant de positionner la partie centrale 412 sur l'outil 600, on peut revêtir les parties centrales 233, 234 de la face avant de la sous-plaque 230 d'une colle adaptée, de sorte que la pose de la partie centrale 412 sur l'outil 600 permet le collage de la partie centrale 412 sur la sous-plaque 230 (éventuellement en appliquant une pression sur la face avant de la partie centrale 412).

Le positionnement unique de la partie périphérique 411 sur l'outil 600 et le positionnement unique de la partie centrale 412 sur ce même outil 600 permettent d'obtenir le positionnement relatif souhaité entre la partie centrale 412 et la partie périphérique 411 et ainsi d'assurer la continuité du motif présenté par leurs faces avant respectives, comme visible en figure 10.

## Revendications

1. Ensemble de finition (200; 300) pour interrupteur électrique comprenant un doigt de commande (220 ; 320) et une plaque de finition (210 ; 310 ; 410 ; 510) dont une partie périphérique (211 ; 311 ; 411 ; 511) est pourvue d'un évidement central (214) délimité par un bord interne de ladite partie périphérique (211 ; 311 ; 411 ; 511), **caractérisé en ce que** la plaque de finition (210 ; 310 ; 410 ; 510) comporte une partie centrale (212 ; 312 ; 412; 512) disposée dans l'évidement central (214) et entourée par un interstice (215 ; 315) défini entre le bord externe de la partie centrale (212 ; 312 ; 412 ; 512) et le bord interne de la partie périphérique (211 ; 311 ; 411 ; 511) pour accueillir le doigt de commande (220 ; 320) de l'interrupteur électrique entourant la partie centrale (212 ; 312 ; 412 ; 512).

2. Ensemble de finition selon la revendication 1, dans lequel la partie centrale (212 ; 312 ; 412 ; 512) et la partie périphérique (211 ; 311 ; 411 ; 511) sont respectivement montées sur une première partie (233, 234) et une seconde partie (231, 232) d'une face avant d'une sous-plaque (230) et dans lequel la première partie (233, 234) et la seconde partie (231, 232) sont reliées par au moins un pont (235) situé à l'arrière de la sous-plaque (230).

3. Ensemble de finition selon la revendication 2, dans lequel le pont (235) comprend deux parties latérales (236, 237) qui s'étendent vers l'arrière respectivement à partir de la première partie (233, 234) et de la seconde partie (231, 232) et qui ménagent entre elles un espace (243) de réception du doigt de commande (220).

4. Ensemble de finition selon l'une des revendications 1 à 3, dans lequel la face arrière de la plaque de finition (410) porte des moyens de positionnement (416', 417', 418', 419') assurant un positionnement relatif déterminé des parties centrale et périphérique de la plaque de finition (410).

5. Ensemble de finition selon la revendication 4, dans lequel lesdits moyens de positionnement comprennent des détrompeurs (416', 417', 418', 419') disposés suivant un motif asymétrique sur l'une et l'autre des parties centrale (412) et périphérique (411) de la plaque de finition (410), adaptés à coopérer avec des contreparties (616, 617, 618, 619) prévues sur une sous-plaque ou sur un outil (600).

6. Ensemble de finition selon la revendication 5, dans lequel les détrompeurs sont des logements (416', 417', 418', 419') formés en creux dans la face arrière des parties centrale (412) et périphérique (411).

7. Ensemble de finition selon l'une des revendications 1 à 6, dans lequel le bord externe de la partie centrale (212 ; 412) a une forme circulaire.

8. Ensemble de finition selon l'une des revendications 1 à 6, dans lequel le bord externe de la partie centrale (312 ; 512) a une forme rectangulaire ou carrée.

9. Procédé d'assemblage d'un ensemble de finition pour interrupteur électrique comprenant une plaque de finition (210 ; 310 ; 410 ; 510), **caractérisé en ce qu'**il comprend les étapes suivantes :
- découpe d'une partie centrale (212 ; 312 ; 412 ; 512) et d'une partie périphérique (211 ; 311 ; 411 ; 511) de la plaque de finition dans un bloc de matière, la partie périphérique (211 ; 311 ; 411 ; 511) étant pourvue d'un évidement central (214) délimité par un bord interne de ladite partie périphérique (211 ; 311 ; 411 ; 511) ;
- assemblage de la partie centrale (212 ; 312 ; 412 ; 512) et de la partie périphérique (211 ; 311 ; 411 ; 511) de manière à former un interstice (215 ; 315) entre le bord externe de la partie centrale (212 ; 312 ; 412 ; 512) et le bord interne de la partie périphérique (211 ; 311 ; 411 ; 511), l'interstice (215 ; 315) étant destiné à recevoir un doigt de commande (220 ; 320) de l'interrupteur électrique.

10. Procédé d'assemblage selon la revendication 9, comprenant une étape de montage de la partie centrale (212 ; 312 ; 412 ; 512) et de la partie périphérique (211 ; 311 ; 411 ; 511) respectivement sur une première partie (233, 234) et une seconde partie (231, 232) d'une face avant d'une sous-plaque (230), la première partie (233, 234) et la seconde partie (231, 232) étant reliées par au moins un pont (235) situé à l'arrière de la sous-plaque (230).

11. Procédé d'assemblage selon la revendication 10, dans lequel l'étape de montage comprend les sous-étapes suivantes réalisées dans cet ordre :
- montage de la partie centrale (212) sur la première partie (233 , 234) ;
- montage du doigt de commande (220) sur la sous-plaque (230) ;
- montage de la partie périphérique (211) sur la seconde partie (231, 232).

12. Procédé d'assemblage selon la revendication 10 ou 11, dans lequel l'étape de montage comprend les sous-étapes suivantes :
- dépôt de la sous-plaque (230) sur un outil (600) ;
- dépôt de la plaque de finition (410) sur la sous-plaque (230) de telle sorte que des moyens de positionnement (416', 417', 418', 419') de la plaque de finition (410) coopèrent avec des éléments complémentaires (616, 617, 618, 619) de l'outil (600).

13. Procédé d'assemblage selon la revendication 12, dans lequel les moyens de positionnement comprennent au moins un logement (416', 417', 418', 419') formé sur la face arrière de la partie centrale (412) ou de la partie périphérique (411).

## Patentansprüche

1. Verkleidung (200; 300) für einen elektrischen Schalter mit einem Schaltfinger (220; 320) und einer Verkleidungsplatte (210; 310; 410; 510), von der ein Umfangsteil (211; 311; 411; 511) mit einer zentralen Öffnung (214) versehen ist, die durch einen inneren Rand des Umfangsteils (211; 311; 411; 511) begrenzt ist,
**dadurch gekennzeichnet, daß** die Verkleidungsplatte (210; 310; 410; 510) ein zentrales Teil (212; 312; 412; 512) aufweist, das in der zentralen Öffnung angeordnet (214) und von einem zwischen dem äußeren Rand des zentralen Teils (212; 312; 412; 512) und dem inneren Rand des Umfangsteils (211; 311; 411; 511) definierten Zwischenraum (215; 315) umgeben ist, um den Schaltfinger (220; 320) des elektrischen Schalters aufzunehmen, der das zentrale Teil (212; 312; 412; 512) umgibt.

2. Verkleidung gemäß Anspruch 1, bei der das zentrale Teil (212; 312; 412; 512) und das Umfangsteil (211; 311; 411; 511) jeweils auf einem ersten Teil (233, 234) und einem zweiten Teil (231, 232) einer Vorderseite einer Unterplatte (230) montiert sind und bei der der erste Teil (233, 234) und der zweite Teil (231, 232) durch wenigstens eine an der Rückseite der Unterplatte (230) angeordnete Brücke (235) verbunden sind.

3. Verkleidung gemäß Anspruch 2, bei der die Brücke (235) zwei Seitenteile (236, 237) aufweist, die sich vom ersten Teil (233, 234) aus bzw. vom zweiten Teil (231, 232) aus nach hinten erstrecken und die zwischen sich einen Raum (243) zum Aufnehmen der Schaltfingers (220) bilden.

4. Verkleidung gemäß einem der Ansprüche 1 bis 3, bei der die Rückseite der Verkleidungsplatte (410) Positioniermittel (416', 417', 418', 419') aufweist, die ein bestimmtes Positionieren des zentralen Teils und des Umfangsteils der Verkleidungsplatte (410) zueinander sicherstellen.

5. Verkleidung gemäß Anspruch 4, bei der die Positioniermittel Vertauschungsschutzelemente (416', 417', 418', 419') aufweisen, die gemäß einem unsymmetrischen Muster sowohl auf dem zentralen Teil (412) als auch auf dem Umfangsteil (411) der Verkleidungsplatte (410) angeordnet sind und dazu ausgelegt sind, mit den auf einer Unterplatte oder einem Werkzeug (600) vorgesehenen Gegenstücken (616, 617, 618, 619) zusammenzuwirken.

6. Verkleidung gemäß Anspruch 5, bei der die Vertauschungsschutzelemente Aufnahmeräume (416', 417', 418', 419') sind, die als Vertiefungen auf der Rückseite des zentralen Teils (412) und des Umfangsteils (411) ausgebildet sind.

7. Verkleidung gemäß einem der Ansprüche 1 bis 6, bei der der äußere Rand des zentralen Teils (212; 412) kreisförmig ist.

8. Verkleidung gemäß einem der Ansprüche 1 bis 6, bei der der äußere Rand des zentralen Teils (312; 512) rechteckig oder quadratisch ist.

9. Verfahren zum Zusammensetzen einer Verkleidung für einen elektrischen Schalter, der eine Verkleidungsplatte (210; 310; 410; 510) aufweist, **dadurch gekennzeichnet, daß** es die folgenden Schritte aufweist:
- Ausschneiden eines zentralen Teils (212; 312; 412; 512) und eines Umfangsteils (211; 311; 411; 511) der Verkleidungsplatte aus einem Materialblock, wobei das Umfangsteil (211; 311; 411; 511) mit einer zentralen Öffnung (214) versehen ist, die durch einen inneren Rand des Umfangsteils (211; 311; 411; 511) begrenzt ist;
- Zusammensetzen des zentralen Teils (212; 312; 412; 512) und des Umfangsteils (211; 311; 411; 511) derart, daß ein Zwischenraum (215; 315) zwischen dem äußeren Rand des zentralen Teils (212; 312; 412; 512) und dem inneren Rand des Umfangsteils (211; 311; 411; 511) gebildet wird, wobei der Zwischenraum (215; 315) dazu bestimmt ist, einen Schaltfinger (220; 320) des elektrischen Schalters aufzunehmen.

10. Verfahren zum Zusammensetzen gemäß Anspruch 9, das einen Schritt des Montierens des zentralen Teils (212; 312; 412; 512) und des Umfangsteils (211; 311; 411; 511) auf einem ersten Teil (233, 234) bzw. einem zweiten Teil (231 232) einer Vorderseite einer Unterplatte (230) aufweist, wobei der erste Teil (233, 234) und der zweite Teil (231, 232) durch wenigstens eine an der Rückseite der Unterplatte (230) angeordnete Brücke (235) verbunden sind.

11. Verfahren zum Zusammensetzen gemäß Anspruch 10, bei dem der Montageschritt die folgenden in dieser Reihenfolge ausgeführten Unterschritte aufweist:
- Montieren des zentralen Teils (212) auf dem ersten Teil (233, 234);
- Montieren des Schaltfingers (220) auf der Unterplatte (230);
- Montieren des Umfangsteils (211) auf dem zweiten Teil (231, 232).

12. Verfahren zum Zusammensetzen gemäß Anspruch 10 oder 11, bei dem der Montageschritt die folgenden Unterschritte aufweist:
- Aufsetzen der Unterplatte (230) auf ein Werkzeug (600);
- Aufsetzen der Verkleidungsplatte (410) auf die Unterplatte (230) derart, daß Positioniermittel (416', 417', 418', 419') der Verkleidungsplatte (410) mit komplementären Elementen (616, 617, 618, 619) des Werkzeugs (600) zusammenwirken.

13. Verfahren zum Zusammensetzen gemäß Anspruch 12, bei dem die Positioniermittel wenigstens einen Aufnahmeraum (416', 417', 418', 419') aufweisen, der auf der Rückseite des zentralen Teils (412) und des Umfangsteils (411) ausgebildet ist.

## Claims

1. A trim unit (200; 300) for an electrical switch comprising a control member (220; 320) and a trim plate (210; 310; 410; 510) having a peripheral portion (211; 311; 411; 511) that is provided with a central recess (214) defined by an inner edge of said peripheral portion (211; 311; 411; 511), the trim unit being **characterized in that** the trim plate (210; 310; 410; 510) includes a central portion (212; 312; 412; 512) that is arranged in the central recess (214) and that is surrounded by a gap (215; 315) defined between the outer edge of the central portion (212; 312; 412; 512) and the inner edge of the peripheral portion (211; 311; 411; 511) so as to receive the control member (220; 320) of the electrical switch surrounding the central portion (212; 312; 412; 512).

2. A trim unit according to claim 1, wherein the central portion (212; 312; 412; 512) and the peripheral portion (211; 311; 411; 511) are mounted on a first portion (233, 234) and a second portion (231, 232) respectively of a front face of a backplate (230), and wherein the first portion (233, 234) and the second portion (231, 232) are interconnected by at least one bridge (235) that is situated at the rear of the backplate (230).

3. A trim unit according to claim 2, wherein the bridge (235) includes two side portions (236, 237) that extend rearwards respectively from the first portion (233, 234) and from the second portion (231, 232), and that form between them a gap (243) for receiving the control member (220) .

4. A trim unit according to any one of claims 1 to 3, wherein the rear face of the trim plate (410) carries positioner means (416', 417', 418', 419') that ensure determined relative positioning of the central and peripheral portions of the trim plate (410).

5. A trim unit according to claim 4, wherein said positioner means comprise keying means (416', 417', 418', 419') that are arranged in an asymmetric pattern both on the central portion (412) and on the peripheral portion (411) of the trim plate (410), and that are adapted to co-operate with counterparts (616, 617, 618, 619) that are provided on a backplate or on a tool (600).

6. A trim unit according to claim 5, wherein the keying means are housings (416', 417', 418', 419') that are recessed in the rear face of the central and peripheral portions (412, 411).

7. A trim unit according to any one of claims 1 to 6, wherein the outer edge of the central portion (212; 412) has a shape that is circular.

8. A trim unit according to any one of claims 1 to 6, wherein the outer edge of the central portion (312; 512) has a shape that is rectangular or square.

9. A method of assembling a trim unit for an electrical switch including a trim plate (210; 310; 410; 510), the method being **characterized in that** it comprises the following steps:
• cutting a central portion (212; 312; 412; 512) and a peripheral portion (211; 311; 411; 511) of the trim plate out from a block of material, the peripheral portion (211; 311; 411; 511) being provided with a central recess (214) defined by an inner edge of said peripheral portion (211; 311; 411; 511); and
• assembling the central portion (212; 312; 412; 512) and the peripheral portion (211; 311; 411; 511) in such a manner as to form a gap (215; 315) between the outer edge of the central portion (212; 312; 412; 512) and the inner edge of the peripheral portion (211; 311; 411; 511), the gap (215; 315) being for receiving a control member (220; 320) of the electrical switch.

10. An assembly method according to claim 9, comprising a step of mounting the central portion (212; 312; 412; 512) and the peripheral portion (211; 311; 411; 511) on a first portion (233, 234) and a second portion (231, 232) respectively of a front face of a backplate (230), the first portion (233, 234) and the second portion (231, 232) being interconnected by at least one bridge (235) that is situated at the rear of the backplate (230).

11. An assembly method according to claim 10, wherein the mounting step comprises the following sub-steps performed in this order:
• mounting the central portion (212) on the first portion (233, 234);
• mounting the control member (220) on the backplate (230); and
• mounting the peripheral portion (211) on the second portion (231, 232).

12. An assembly method according to claim 10 or claim 11, wherein the mounting step comprises the following sub-steps:
• placing the backplate (230) on a tool (600); and
• placing the trim plate (410) on the backplate (230) in such a manner that positioner means (416', 417', 418', 419') of the trim plate (410) co-operate with complementary elements (616, 617, 618, 619) of the tool (600) .

13. An assembly method according to claim 12, wherein the positioner means comprise at least one housing (416', 417', 418', 419') formed in the rear face of the central portion (412) or of the peripheral portion (411).
